(19) Europäisches Patentamt
European Patent Office
Office européen des brevets

(11) **EP 4 603 547 A1**

(12) **EUROPEAN PATENT APPLICATION**
published in accordance with Art. 153(4) EPC

(43) Date of publication:
**20.08.2025 Bulletin 2025/34**

(21) Application number: **23877202.4**

(22) Date of filing: **04.10.2023**

(51) International Patent Classification (IPC):
***C08L 101/12*** *(2006.01)* ***C08K 3/04*** *(2006.01)*
***C08K 5/42*** *(2006.01)* ***C08K 7/06*** *(2006.01)*
***C08L 79/00*** *(2006.01)* ***H01B 1/24*** *(2006.01)*
***H01M 4/62*** *(2006.01)*

(52) Cooperative Patent Classification (CPC):
**C08K 3/04; C08K 5/42; C08K 7/06; C08L 79/00; C08L 101/12; H01B 1/24; H01M 4/62;** Y02E 60/10

(86) International application number:
**PCT/JP2023/036166**

(87) International publication number:
**WO 2024/080197 (18.04.2024 Gazette 2024/16)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **14.10.2022 JP 2022165807**

(71) Applicant: **Idemitsu Kosan Co., Ltd.**
**Tokyo 100-8321 (JP)**

(72) Inventors:
- **ONODERA, Shingo**
**Tokyo 100-8321 (JP)**
- **BANDO, Toru**
**Tokyo 100-8321 (JP)**

(74) Representative: **Gille Hrabal Partnerschaftsgesellschaft mbB**
**Patentanwälte**
**Brucknerstraße 20**
**40593 Düsseldorf (DE)**

(54) **CONDUCTIVE COMPOSITION, CONDUCTIVE MATERIAL, CONDUCTIVE FILM, AND CONDUCTIVE ARTICLE**

(57) A conductive composition including (a) a carbon nanotube, (b) a soluble conductive polymer, and (c) a solvent, wherein the soluble conductive polymer is (i) or (ii) below.

(i) a complex in which a conductive polymer is doped with a sulfonic acid compound with hydrophobicity
(ii) a conductive polymer having a sulfonic acid group-containing side chain

Fig. 4

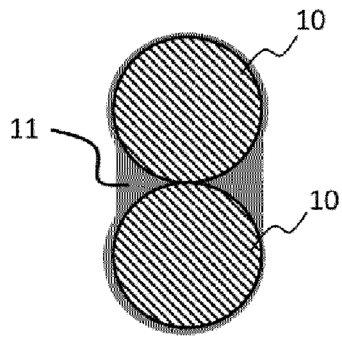


EP 4 603 547 A1

## Description

Technical Field

The present invention relates to a conductive composition, conductive material, conductive film and conducting article.

Background Art

Since a carbon nanotube has the high conductivity and specific shape thereof, it is utilized as conductive aids of electrodes in various batteries, electrodes for touch film, electromagnetic wave shielding materials, anti-static agents, heat dissipation materials, and the like.

When a dispersion liquid in which the carbon nanotube is dispersed in water or an organic solvent, a coating film thereof, or the like is dried, it is generally used as electrically conducting material and the like. Moreover, the carbon nanotube is widely used as it has excellent conductivity or thermal conductivity, due to the electric conductivity or thermal conductivity via contact points of the carbon nanotubes.

In recent years, aqueous dispersion type or organic solvent dispersion type of conductive polymers have been developed, and attempts have been made to use these conductive polymers complexed with the carbon nanotube (Patent Document 1).

Related Art Documents

Patent Documents

[Patent Document 1] JP 2015-170740 A

Summary of the Invention

In recent years, better conductivity and thermal conductivity in materials using the carbon nanotube have been demanded.

An effect of improved conductivity and thermal conductivity has not been necessarily sufficient even by the technique of Patent Document 1.

The objective of the present invention is to provide a conductive composition of which a material having excellent conductivity is obtained.

Moreover, the objective of the present invention is to provide a conductive composition of which a material having excellent thermal conductivity is obtained.

According to the present invention, the following conductive composition, and the like is provided.

1. A conductive composition comprising (a) a carbon nanotube, (b) a soluble conductive polymer, and (c) a solvent, wherein the soluble conductive polymer is (i) or (ii) below.

   (i) a complex in which a conductive polymer is doped with a sulfonic acid compound with hydrophobicity
   (ii) a conductive polymer having a sulfonic acid group-containing side chain

2. The conductive composition according to 1, wherein the number of carbon atoms of the sulfonic acid compound with hydrophobicity in the (i), or the sulfonic acid group-containing side chain in the (ii) is 6 or more.
3. The conductive composition according to 1 or 2, wherein the HLB value of the sulfonic acid compound with hydrophobicity in the (i) is 1 to 8.
4. The conductive composition according to any one of 1 to 3, wherein the sulfonic acid compound with hydrophobicity in the (i) is a sulfonic acid compound represented by the following formula (III):

$$M(O_3SCH(CH_2COOR^{12})COOR^{13})_m \qquad (III)$$

wherein in the formula (III),

   M is a hydrogen atom, organic free radical or inorganic free radical,
   m is a valence number of M,
   $R^{12}$ and $R^{13}$ are independently a hydrocarbon group or a group represented by $-(R^{14}O)_r-R^{15}$,

$R^{14}$ is a hydrocarbon group or silylene group,
$R^{15}$ is a hydrogen atom, hydrocarbon group or a group represented by $R^{16}{}_3Si$-,
$R^{16}$ is a hydrocarbon group, three $R^{16}$'s may be the same as or different from each other, and r is an integer of 1 or more.

5. The conductive composition according to any one of 1 to 4, wherein the conductive polymer in the (i) is polyaniline.
6. The conductive composition according to any one of 1 to 5, which further comprises (d) a phenolic compound.
7. The conductive composition according to any one of 1 to 6, wherein the amount of the component (b) is 1 to 400 parts by mass based on 100 parts by mass of the component (a).
8. The conductive composition according to any one of 1 to 7, which further comprises at least one selected from the group consisting of a resin and an inorganic material.
9. A conductive material, produced from the conductive composition according to any one of 1 to 8.
10. A film, molded body, powder body or granular body comprising the conductive material according to 9.
11. A conductive aid for a battery, comprising the conductive material according to 9.
12. A conductive film comprising (a) a carbon nanotube, and (b) a soluble conductive polymer, wherein the soluble conductive polymer is (i) or (ii) below.

(i) a complex in which a conductive polymer is doped with a sulfonic acid compound with hydrophobicity
(ii) a conductive polymer having a sulfonic acid group-containing side chain

13. A conductive article, produced from a mixture of the conductive composition according to any one of 1 to 7, and at least one selected from the group consisting of a resin and an inorganic material.
14. A conductive plating laminate comprising a substrate, and an electrically conducting layer composed of the conductive material according to 9, wherein the electrically conducting layer and the substrate are in contact.
15. A battery comprising the conductive aid for a battery according to 11.

According to the present invention, a conductive composition of which a material having excellent conductivity is obtained, can be provided.

Moreover, according to the present invention, a conductive composition of which a material having excellent thermal conductivity is obtained, can be provided.

Brief Description of the Drawings

Fig. 1 is a diagram schematically showing a mechanism of conductive expression in a coating film obtained from a composition including carbon nanotubes.
Fig. 2 is a diagram schematically showing a cross section of a contact point of the carbon nanotubes of Fig. 1.
Fig. 3 is a diagram schematically showing a cross section of contact point circumferences of carbon nanotubes of a material obtained from a composition including a solvent dispersion type conductive polymer.
Fig. 4 is a diagram schematically showing a mechanism of conductive expression of a material obtainable from a conductive composition according to an aspect of the present invention.

Mode for Carrying out the Invention

In the present specification, the expression 'x to y' is configured to express a numerical value range of 'x or more, and y or less'. Upper limit values and lower limit values described in relation to numerical value ranges may be optionally combined.

[Conductive composition]

A conductive composition according to an aspect of the present invention includes

(a) a carbon nanotube (hereinunder also referred to as 'component (a)'),
(b) a soluble conductive polymer (hereinunder also referred to as 'component (b)'), and
(c) a solvent (hereinunder also referred to as 'component (c)').

Moreover, the soluble conductive polymer is (i) or (ii) below.

(i) a complex in which a conductive polymer is doped with a sulfonic acid compound with hydrophobicity
(ii) a conductive polymer having a sulfonic acid group-containing side chain

When the conductive composition of the present aspect includes the aforementioned component (a) to component (c), a material obtained from the conductive composition shows a conductivity and thermal conductivity which is higher than a material configured with the carbon nanotube alone (i.e., a material obtained from a carbon nanotube-containing composition of which the conductive polymer is not compounded). The reason for this is presumed to be as follows.

As shown in Fig. 1, with a material (e.g., coating film, molded body, etc.) obtained by removing a solvent component from a composition including carbon nanotubes, the carbon nanotubes 10 are in contact with each other, and electrical and thermal conduction occurs at contact points 10a thereof to form a conductive path (electric and thermal conductive region). Thereby, the entire material (e.g., coating film, molded body, etc.) obtained after removal of a solvent component exhibits conductivity.

When a material configured with carbon nanotubes alone is used, as shown in Fig. 2, an electric and thermal conductive path is formed only at the contact points 10a where the carbon nanotubes 10 are in contact with each other.

Meanwhile, Fig. 3 shows a model drawing of a material obtained from a composition including a solvent dispersion type conductive polymer and carbon nanotubes.

A solvent dispersion type of conductive polymer (e.g., poly(3,4-ethylene dioxy thiophene): polystyrene sulfonic acid (PEDOT:PSS)) generally disperses in a solvent as particles of about several tens nm. Therefore, as shown in Fig. 3, even when mixing the solvent dispersion type of conductive polymer and the carbon nanotube (fiber diameter of general single-walled carbon nanotube: 0.5 to 3 nm), the solvent dispersion type of conductive polymer particles 12 is in contact only with the contact points of carbon nanotubes 10. Therefore, a conductive path between the carbon nanotubes 10 is formed only at the contact point 10a of the carbon nanotubes 10, and the contact point between each carbon nanotube 10 and conductive polymer particle 12.

Accordingly, even when mixing the solvent dispersion type of conductive polymer and the carbon nanotube, the amount of increase of the conductive paths between the carbon nanotubes 10 is small. Therefore, even when compounding the conductive polymer, conductivity and thermal conductivity does not improve very much.

In contrast, in the material obtained by removing a solvent component from the conductive composition using the soluble conductive polymer of the present aspect, as shown in Fig. 4, a soluble conductive polymer 11 adheres to the circumference including the contact points of the carbon nanotubes 10, thereby becoming a state where a portion of the surface of the carbon nanotubes 10 is coated, or a state where the entire surface of the carbon nanotubes 10 is coated. Therefore, with the material (e.g., coating film, molded body etc.) obtained after removal of a solvent component of the conductive composition of the present aspect, the carbon nanotubes 10 become a state of having been electrically connected not only at the contact points thereof and circumferences thereof, but also via the soluble conductive polymer 11 which is present between each carbon nanotube 10.

In other words, with a material obtained after removal of a solvent component of the conductive composition of the present aspect, as shown in Fig. 4, a conductive path between the carbon nanotubes 10 is formed in a surface shape by the soluble conductive polymer 11 interposed between each carbon nanotube 10. Therefore, compared with the states shown in Fig. 2 or Fig. 3, conductive paths which are formed per unit of volume are increased.

Therefore, in the material obtained by removing a solvent component from the conductive composition of the present aspect, since the contact resistance during electric supply decreases and the resistance value of the entire material after removal of a solvent component is suppressed to a low value as compared with the states shown in Fig. 2 or Fig. 3, it shows excellent conductivity and moreover excellent thermal conductivity.

The 'soluble conductive polymer' refers to a conductive polymer which shows solubility with respect to a solvent component (an organic solvent or water). The conductive polymer being dissolved in a solvent component refers to a state where the conductive polymer is dispersed in a solvent at the molecular level.

Accordingly, as shown in Fig. 4, it is considered that with a material obtained by removing a solvent component from the conductive composition including the soluble conductive polymer, the soluble conductive polymer 11 adheres to the circumference of the carbon nanotubes 10, thereby becoming a state of having been coated to the surface of each carbon nanotube 10, where conductive paths are formed in a surface shape at the contact points between each carbon nanotube 10.

Moreover, when a conductive polymer having a hydrophilic dopant component (e.g., polystyrene sulfonic acid (PSS)) is used as the conductive polymer mixed with the carbon nanotube, or when a conductive polymer where the entirety of molecules shows hydrophilicity is used, the affinity with the surface of the carbon nanotube, which is hydrophobic, is low. Hence it is difficult for the surface of each carbon nanotube to be in a state of being entirely coated by the conductive polymer.

In contrast, when (i) the complex in which the conductive polymer is doped with the sulfonic acid compound with hydrophobicity, or (ii) the conductive polymer having a sulfonic acid group-containing side chain is used as the soluble

conductive polymer in the conductive composition of the present aspect, the affinity is high with the surface of the hydrophobic carbon nanotube.

Due to the affinity, as shown in Fig. 4, the soluble conductive polymer 11 easily adheres to the circumference of each carbon nanotube 10, and a state is obtained where the surface of each carbon nanotube 10 after the solvent is removed is coated. Hence, it is presumed that conductive paths are formed in a surface shape between each carbon nanotube 10.

It is considered that the conductive composition of the present aspect, by the synergistic effect of the carbon nanotube with high conductivity and thermal conductivity together with the conductive polymer having both solubility and hydrophobicity, can obtain high conductivity and thermal conductivity, which is not obtained by the conventional combination of the carbon nanotube and the conductive polymer.

Accordingly, the conductive polymer to be used is not particularly limited as long as it has both solubility and hydrophobicity; but it can be used in the conductive composition of the present aspect, and an effect obtained by the conductive composition of the present aspect can be obtained.

Each component of the conductive composition of the present aspect is explained below.

(Component (a): carbon nanotube)

Examples of the carbon nanotube include a single-walled carbon nanotube (SWCNT), double-walled carbon nanotube (DWCNT), multi-walled carbon nanotube (MWCNT), carbon nano fiber, and the like.

As the carbon nanotube, these may be used alone, or two or more thereof may be used in combination.

The fiber diameter of the carbon nanotube is not particularly limited; however, from the viewpoint of obtaining good conductivity in a material obtained from the conductive composition, for example, the fiber diameter of a single-walled carbon nanotube (SWCNT) may be 0.1 to 50 nm, it may be 0.3 to 10 nm, or it may be 0.5 to 3 nm.

The fiber diameter of a multi-walled carbon nanotube (MWCNT) may be 1 to 500 nm, may be 3 to 300 nm, or may be 5 to 100 nm.

The fiber diameter of a double-walled carbon nanotube (DWCNT) may be 0.2 to 100 nm, may be 0.5 to 80 nm, or may be 1 to 50 nm.

The fiber diameter of a carbon nano fiber (CNF) may be 100 to 1,000 nm, may be 120 to 800 nm, or may be 150 to 500 nm.

In the present specification, the fiber diameter of a carbon nanotube means the fiber outer diameter.

The fiber diameter and the below-mentioned fiber length of the carbon nanotube can be determined by observing the carbon nanotube with a scanning transmission electron microscope, arbitrarily selecting 100 carbon nanotubes and measuring the outer diameters and lengths thereof in the observed image, and calculating the arithmetic average value of the outer diameters and the arithmetic average value of the lengths.

The fiber length of the carbon nanotube is not particularly limited; however, from the viewpoint of obtaining good conductivity in a material obtained from the conductive composition, for example, the fiber length thereof may be 0.1 $\mu$m or more, it may be 5 $\mu$m or more, or it may be 10 $\mu$m or more.

The amount of the component (a) may be 5% by mass or more, 10% by mass or more, or 15% by mass or more; and it may be 95% by mass or less, 93% by mass or less, 90% by mass or less, 80% by mass or less, or 70% by mass or less, based on 100% by mass of the total amount of the component (a) and component (b).

When the amount of the component (a) is in the aforementioned range based on 100% by mass of the total amount of the component (a) and component (b), good conductivity is obtained in a material obtained from the conductive composition.

The amount of the component (a) may be, for example, 0.1% by mass or more, 0.15% by mass or more, or 0.18% by mass or more, based on 100% by mass of the entire composition.

The carbon nanotube can be used in the conductive composition of the present aspect in a state of having been dispersed in a dispersion medium. In this case, the dispersion medium of the carbon nanotube is introduced into the conductive composition of the present aspect, and is included in the solvent of the component (c) in an electrically conducting composition.

The dispersion medium of the carbon nanotube is not particularly limited as long as the carbon nanotube can be uniformly dispersed; however, for example, it is preferably glycol ethers such as dipropylene glycol dimethyl ether, methyl ethyl cellosolve, propylene glycol mono methyl ether, and propylene glycol mono methyl ether acetate (PGMEA); ketones such as methyl ethyl ketone, methyl isobutyl ketone, cyclohexanone, and isophorone; alcohols such as methanol, ethanol, isopropyl alcohol, and ethylene glycol; N-methyl pyrrolidone; N,N-dimethyl formamide; water; and the like.

(Component (b): soluble conductive polymer)

Examples of the soluble conductive polymer include the below (i) first embodiment or (ii) second embodiment.

(i) a complex in which a conductive polymer is doped with a sulfonic acid compound with hydrophobicity
(ii) a conductive polymer having a sulfonic acid group-containing side chain

(i) First embodiment

A soluble conductive polymer of the first embodiment is a complex in which a conductive polymer is doped with the sulfonic acid compound with hydrophobicity.
The soluble conductive polymer of the first embodiment mentioned above shows hydrophobicity, and shows excellent solubility with respect to a solvent (an organic solvent or water). Therefore, after the solvent included in the conductive composition is removed, a state is obtained where the surface of each carbon nanotube is coated by the soluble conductive polymer.
Examples of the conductive polymer of the first embodiment include polyaniline, polythiophene, polypyrrole, and derivatives thereof. These may have a substituent, or may not have a substituent. These may be used alone, or two or more thereof may be used in combination.
From the viewpoint of versatility and economy, polyaniline is preferable as the conductive polymer.
From the viewpoint of obtaining good conductivity in a complex, the polyaniline preferably has a weight average molecular weight of 10,000 or more, more preferably 20,000 or more,

still more preferably 30,000 or more and 1,000,000 or less,
still more preferably 40,000 or more and 1,000,000 or less, and most preferably 52,000 or more and 1,000,000 or less.

The weight average molecular weight of polyaniline is measured by the method described in the examples.
Polyaniline may have a substituent, or may not have a substituent; however, from the viewpoint of versatility and economy, it is preferably unsubstituted polyaniline.
Examples of the substituent in the case where it has the substituent include a linear or branched hydrocarbon group such as a methyl group, ethyl group, hexyl group, octyl group; alkoxy group such as a methoxy group, and ethoxy group; aryloxy group such as a phenoxy group; and halogenated hydrocarbon such as a trifluoro methyl group ($-CF_3$ group).
The sulfonic acid compound with hydrophobicity can be used without any particular limitation on chemical structural as long as the conductive polymer is doped with it to thereby form a complex which shows solubility with respect to a solvent.
In the present specification, 'hydrophobic' and 'hydrophobicity' refer to an HLB (Hydrophilic-Lipophilic Balance) value being within a range of 1 to 8.
Moreover, when the number of carbon atoms of the sulfonic acid compound is 6 or more, the HLB value becomes within a range of 1 to 8, and it has hydrophobicity.
In the below explanation, the sulfonic acid compound with hydrophobicity is also referred to as a hydrophobic sulfonic acid compound.
The hydrophobic sulfonic acid compound is doped in a substituted or unsubstituted polyaniline as a proton donor to form a polyaniline complex.
It can be confirmed that the hydrophobic sulfonic acid compound is doped in a polyaniline as a proton donor, by ultraviolet, visible light, or near infrared spectroscopy, or by X-ray photoelectron spectroscopy.
The sulfonic acid compound can be used as a proton donor without any particular limitation on chemical structural as long as it has sufficient acidity for generating a carrier in the polyaniline.
The number of carbon atoms of the hydrophobic sulfonic acid compound may be 6 or more, 7 or more, 8 or more, or 10 or more; and may be 35 or less, 30 or less, 25 or less, or 20 or less.
When the number of carbon atoms of the hydrophobic sulfonic acid compound is in the aforementioned range, the complex in which the conductive polymer is doped with the hydrophobic sulfonic acid compound shows hydrophobicity entirely, and shows excellent solubility with respect to solvent (an organic solvent or water).
The HLB value of the hydrophobic sulfonic acid compound may be 1.0 to 8.0, 2.0 to 7.0, 3.0 to 5.0, or 3.5 to 4.8.
If the HLB value of the hydrophobic sulfonic acid compound is in the aforementioned range, the complex in which in the conductive polymer is doped with the hydrophobic sulfonic acid compound shows hydrophobicity entirely, and shows excellent solubility with respect to a solvent (an organic solvent or water).
The HLB value of the sulfonic acid compound is calculated by a formula based on Griffin's method below.

$$\text{HLB value} = 20 \times \text{the total amount of formula weight of the hydrophilic part / molecular weight}$$

Examples of the hydrophobic sulfonic acid compound (proton donor) include, for example, a sulfonic acid compound (proton donor) represented by the following formula (I):

$$M(XAR_n)_m \qquad (I)$$

wherein in the formula (I), M is a hydrogen atom, organic free radical or inorganic free radical;

X is a group represented by $-SO_3^-$; A is a hydrocarbon group which may contain a substituent;
R is independently a substituent represented by $-R^1$, $-OR^1$, $-COR^1$, $-COOR^1$, $-CO(COR^1)$, or-$CO(COOR^1)$;
R' is a hydrocarbon group which has 4 or more carbon atoms and which may contain a substituent, silyl group, alkyl silyl group, a group represented by $-(R^2O)_x-R^3$, or a group represented by $-(OSiR^3{}_2)_x-OR^3$ (wherein $R^2$ is an alkylene group, $R^3$ is independently a hydrocarbon group which may be the same as or different from each other, and x is an integer of 1 or more);
n is an integer of 2 or more; and
m is a valence number of M.

In the aforementioned formula (I), M is a hydrogen atom, organic free radical or inorganic free radical.
Examples of the aforementioned organic free radical include a pyridinium group, imidazolium group, anilinium group, and the like. Examples of the aforementioned inorganic free radical include sodium, lithium, potassium, cesium, ammonium, and the like.
A is a hydrocarbon group which may contain a substituent.
The hydrocarbon group may include a (n+1) valent group corresponding to, for example, a linear or branched alkyl group (for example, an ethylene group) having 1 to 24 carbon atoms (preferably 1 to 8, and more preferably 1 to 4); an alkenyl group; a cycloalkyl group which may contain a substituent such as cyclopentyl, cyclohexyl, cycloheptyl, cycloheptyl, cyclooctyl and mentyl; a dicycloalkyl group or polycycloalkyl group which may be condensed such as bicyclohexyl, norbornyl and adamantyl; an aryl group containing an aromatic ring which may contain a substituent such as phenyl, tosyl, thiophenyl, pyrrolynyl, pyridinyl and furanyl; a diaryl group or polyaryl group which may be condensed such as naphthyl, anthracenyl, fluorenyl, 1,2,3,4-tetrahydronaphthyl, indanyl, quinolinyl and indenyl; an alkylaryl group; and the like.
R is independently a substituent represented by $-R^1$, $-OR^1$, $-COR^1$, $-COOR^1$, $-CO(COR^1)$, or - $CO(COOR^1)$.
R' is a hydrocarbon group which has 4 or more (for example, 4 to 8, or 4 to 12) carbon atoms and which may contain a substituent (for example, alkyl group having 1 to 4 (preferably a methyl group, ethyl group, propyl group) carbon atoms), silyl group, alkyl silyl group, a group represented by $-(R^2O)_x-R^3$, or a group represented by $-(OSiR^3{}_2)_x-OR^3$ ($R^2$ is an alkylene group, $R^3$ is independently a hydrocarbon group which may be the same as or different from each other, x is an integer of 1 or more).
Examples of the hydrocarbon group of $R^1$ include a linear or branched butyl group, pentyl group, hexyl group, heptyl group, octyl group, nonyl group, decyl group, dodecyl group, pentadecyl group, eicosanyl group, and the like.
n is an integer of 2 or more (for example, 2 to 4, or 2 to 3).
m is a valence number of M.
The sulfonic acid compound represented by the formula (I) mentioned above is hydrophobic; moreover, the complex in which the conductive polymer is doped with the sulfonic acid compound shows excellent solubility with respect to a solvent (an organic solvent or water).
Therefore, when the sulfonic acid compound represented by the formula (I) is used as the hydrophobic sulfonic acid compound, a state is obtained where the surface of each carbon nanotube is coated by the soluble conductive polymer (a complex in which a conductive polymer is doped with the sulfonic acid compound of the formula (I)).
The hydrophobic sulfonic acid compound (proton donor) represented by the formula (I) is preferably a dialkyl benzene sulfonic acid, dialkyl naphthalene sulfonic acid, sulfophthalic acid ester, or a sulfonic acid compound (proton donor) (organic protonic acid or a salt thereof) represented by the following formula (II).

$$M(XCR^4(CR^5{}_2COOR^6)COOR^7)p \qquad (II)$$

In the aforementioned formula (II), M and X are the same as those in the formula (I).
p is a valence number of M.
$R^4$ and $R^5$ are independently a hydrogen atom, hydrocarbon group, or a group represented by $R^8{}_3Si$- (here, $R^8$ is a hydrocarbon group, and three $R^8$'s may be the same as or different from each other).
Examples of the hydrocarbon group of $R^4$ and $R^5$ include a linear or branched alkyl group having 1 to 24 carbon atoms; aryl group including an aromatic ring; alkyl aryl group; and the like.
The hydrocarbon group of $R^8$ is the same as the hydrocarbon group of $R^4$ and $R^5$.
$R^6$ and $R^7$ are independently a hydrocarbon group, or a group represented by $-(R^9O)_q-R^{10}$ [here, $R^9$ is a hydrocarbon group or silylene group, $R^{10}$ is a hydrogen atom, hydrocarbon group, or a group represented by $R^{11}{}_3Si$- ($R^{11}$ is

a hydrocarbon group, and three $R^{11}$'s may be the same as or different from each other), and q is an integer of 1 or more].

Examples of the hydrocarbon group of $R^6$ and $R^7$ include a linear or branched alkyl group having 1 to 24 carbon atoms and preferably 4 or more (for example, 4 to 10, or 4 to 14) carbon atoms; aryl group including an aromatic ring; alkyl aryl group; and the like.

Specific examples of the hydrocarbon group of $R^6$ and $R^7$ include a linear or branched butyl group, pentyl group, hexyl group, octyl group (for example, 2-ethylhexyl), decyl group, and the like.

The hydrocarbon group of $R^9$ is a linear or branched alkylene group having of 1 to 24 carbon atoms; arylene group including an aromatic ring; alkyl arylene group; aryl alkylene group; and the like.

Moreover, the hydrocarbon group of $R^{10}$ and $R^{11}$ is the same as those of $R^4$ and $R^5$. q is preferably an integer of 1 to 10.

Specific examples of the acid of the proton donor represented by the formula (II) in the case where $R^6$ and $R^7$ are a group represented by $-(R^9O)_q-R^{10}$ include acids represented by the following formulas:

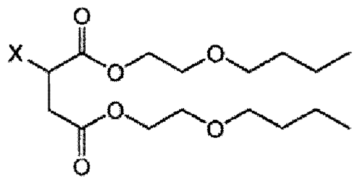

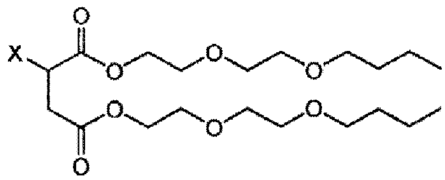

wherein in the formulas, X is a group represented by $-SO_3$, and the like.

The sulfonic acid compound represented by the formula (II) mentioned above is hydrophobic; moreover, a complex in which a conductive polymer is doped with the sulfonic acid compound shows excellent solubility with respect to a solvent (an organic solvent or water).

Therefore, when the sulfonic acid compound represented by the formula (II) is used as the hydrophobic sulfonic acid compound, a state is obtained where the surface of each carbon nanotube is coated by the soluble conductive polymer (the complex in which the conductive polymer is doped with the sulfonic acid compound of the formula (II)).

The hydrophobic sulfonic acid compound (proton donor) (organic protonic acid or a salt thereof) represented by the aforementioned formula (II) is preferably a sulfosuccinic acid derivative represented by the following formula (III):

$$M(O_3SCH(CH_2COOR^{12})COOR^{13})_m \qquad (III)$$

wherein in the formula (III), M and m are the same as those in the aforementioned formula (I).

$R^{12}$ and $R^{13}$ are independently a hydrocarbon group, or a group represented by $-(R^{14}O)_r-R^{15}$ [here, $R^{14}$ is a hydrocarbon group or silylene group, $R^{15}$ is a hydrogen atom, hydrocarbon group, or a group represented by $R^{16}{}_3Si-$ (here, $R^{16}$ is a hydrocarbon group, and three $R^{16}$'s may be the same as or different from each other), and r is an integer of 1 or more].

The hydrocarbon group of $R^{12}$ and $R^{13}$ is the same as the hydrocarbon group of $R^6$ and $R^7$.

The hydrocarbon group of $R^{14}$ is the same as the hydrocarbon group of $R^9$. Moreover, the hydrocarbon group of $R^{15}$ and $R^{16}$ is the same as the hydrocarbon group of $R^4$ and $R^5$.

r is preferably an integer of 1 to 10.

Specific examples of the sulfosuccinic acid derivative represented by the formula (III) in the case where $R^{12}$ and $R^{13}$ are the group represented by $-(R^{14}O)_r-R^{15}$ are the same as those of the proton donor represented by the formula (II) in the case where $R^6$ and $R^7$ are the group represented by $-(R^9O)_n-R^{10}$.

The hydrocarbon group of $R^{12}$ and $R^{13}$ is the same as those of the hydrocarbon group of $R^6$ and $R^7$, and it is preferably a butyl group, hexyl group, 2-ethylhexyl group, decyl group, or the like.

The sulfonic acid compound represented by the formula (III) mentioned above is hydrophobic; moreover, a complex in which a conductive polymer is doped with the sulfonic acid compound shows excellent solubility with respect to a solvent (an organic solvent or water).

Therefore, when the sulfonic acid compound represented by the formula (III) is used as the hydrophobic sulfonic acid compound, a state is obtained where the surface of each carbon nanotube is coated by the soluble conductive

polymer (the complex in which the conductive polymer is doped with the sulfonic acid compound of the formula (III)).
Moreover, as a hydrophobic sulfonic acid compound other than the sulfonic acid compounds (proton donor) represented by the aforementioned formulas (I) to (III), for example, camphor sulfonic acid (HLB value: 7.0), dinonyl naphthalene sulfonic acid (HLB value: 3.5), or adamantane sulfonic acid (HLB value: 7.5) can be used as the hydrophobic sulfonic acid compound (proton donor).
When the hydrophobic sulfonic acid compound is used as a proton donor based on polyaniline, the doping ratio of the hydrophobic sulfonic acid compound (proton donor) to polyaniline is preferably 0.30 or more and 0.65 or less, more preferably 0.32 or more and 0.60 or less, still more preferably 0.33 or more and 0.57 or less, and most preferably 0.34 or more and 0.55 or less. When the doping ratio is 0.30 or more, the solubility of a polyaniline complex into an organic solvent is sufficiently high.
The doping ratio is defined by (the number of moles of the hydrophobic sulfonic acid compound (proton donor) doped in polyaniline) / (the number of moles of a monomer unit of polyaniline). For example, the doping ratio of a polyaniline complex containing an unsubstituted polyaniline and the hydrophobic sulfonic acid compound (proton donor) being 0.5 means that two monomer unit molecules of polyaniline are doped with one hydrophobic sulfonic acid compound (proton donor).
The doping ratio can be calculated if the number of moles of the hydrophobic sulfonic acid compound (proton donor) and the monomer units of polyaniline in the polyaniline complex can be measured.
In the present aspect, because the proton donor is an organic sulfonic acid, the doping ratio can be calculated by quantifying, with an organic elemental analytical method, the number of moles of nitrogen atoms derived from the monomer units of the polyaniline, with the number of moles of sulfur atoms derived from the proton donor, and taking the ratio of the values thereof.
A polyaniline complex preferably includes an unsubstituted polyaniline and a sulfonic acid which is a proton donor, and satisfies the following formula (5):

$$0.32 \leq S_5 / N_5 \leq 0.60 \quad (5)$$

wherein in the formula, $S_5$ is the total number of moles of sulfur atoms contained in the polyaniline complex, and $N_5$ is the total number of moles of nitrogen atoms contained in the polyaniline complex; and the number of moles of the aforementioned nitrogen atoms and sulfur atoms is a value measured by an organic elemental analytical method.
The soluble conductive polymer according to the first embodiment may be used alone, or two or more thereof may be used in combination.
The method of producing a soluble conductive polymer according to the aforementioned first embodiment is not particularly limited; however, it can be produced, for example, by the method for producing a soluble conductive polymer according to the first embodiment as explained below.
For example, the aforementioned hydrophobic sulfonic acid compound (proton donor), aforementioned aniline corresponding to the polyaniline, and as necessary a surfactant (for example, non-ionic emulsifier) are made to dissolve in a water immiscible organic solvent (for example, hydrocarbon-based solvent (preferably toluene, xylene)), where an acidic aqueous solution (for example, phosphoric acid aqueous solution) is added thereto, and a reaction liquid having two liquid phases of a water immiscible organic solvent and water are stirred, a polymerisation initiator (for example, ammonium persulfate) is supplied, and polymerization takes place.
After polymerisation, a polyaniline complex water immiscible organic solvent solution can be obtained by leaving the water immiscible organic solvent phase to stand, thereby separating it.
The solution is moved to an evaporator, a volatile component is removed by distilling it off, and a polyaniline complex (protonated polyaniline) can be obtained.

(ii) Second embodiment

A soluble conductive polymer of the second embodiment is a conductive polymer having a side chain containing a sulfonic acid group (sulfonic acid group-containing side chain).
In the below explanation, the conductive polymer having a sulfonic acid group-containing side chain is also referred to as a sulfonic acid group-containing conductive polymer.
The aforementioned soluble conductive polymer of the second embodiment shows a high hydrophobicity, and shows excellent solubility with respect to a solvent (an organic solvent or water). Therefore, a state is obtained where the surface of each carbon nanotube is coated by the soluble conductive polymer, after the solvent included in the conductive composition is removed.
Examples of monomers of a main chain of the sulfonic acid group-containing conductive polymer include 3,4-ethylenedioxythiophene (EDOT), aniline, methoxy aniline, and the like.
Examples of the sulfonic acid group-containing side chain which covalently bonds to the main chain include an

alkyl sulfonic acid group, alkyl ether sulfonic acid group, and the like.

The number of carbon atoms of the sulfonic acid group-containing side chain may be, for example, 1 to 15, or may be 2 to 10.

The amount of the component (b) may be 1 part by mass or more, 5 parts by mass or more, 10 parts by mass or more, 15 parts by mass or more, or 20 parts by mass or more; and it may be 2,000 parts by mass or less, 1,000 parts by mass or less, 800 parts by mass or less, 500 parts by mass or less, or 400 parts by mass or less, based on 100 parts by mass of the component (a).

Moreover, the amount of the component (b) may be 1 to 1,000 parts by mass, it may be 1 to 400 parts by mass, and it may be 15 to 400 parts by mass, based on 100 parts by mass of the component (a).

When the amount of the component (b) is in the aforementioned range based on 100 parts by mass of the component (a), good conductivity is obtained in a material obtained from the conductive composition.

The amount of the component (b) may be 0.01 to 20% by mass, it may be 0.05 to 15% by mass, it may be 0.08 to 10% by mass, and it may be 0.15 to 10% by mass, based on 100% by mass of the entire composition.

(Component (c): solvent)

The conductive composition according to an aspect of the present invention includes a solvent.

The solvent is not particularly limited as long as it dissolves the component (b), and it may be water or an organic solvent; however, from the viewpoint of dissolving the component (b), an organic solvent is preferable. The organic solvent may be a water-soluble organic solvent, or it may be an organic solvent (water immiscible organic solvent) which is not substantially miscible in water.

The solvent may contain a solvent to be introduced in the conductive composition as a dispersion medium of the component (a) carbon nanotube.

Moreover, the solvent which dissolves the component (b), and the dispersion medium of the component (a) may be the same as or different from each other.

The water-soluble organic solvent may be a protic polar solvent or aprotic polar solvent, which include, for example, alcohols such as isopropyl alcohol, 1-propanol, 1-butanol, 2-butanol, 2-pentanol, benzyl alcohol, alkoxy alcohol (for example, 1-methoxy-2-propanol, 3-methoxy-1-butanol, 3-methoxy-3-methyl butanol, 1-ethoxy-2-propanol, 2-ethoxy-1-propanol, 1-butoxy-2-propanol) and ethylene glycol; ketones such as acetone; ethers such as tetrahydrofuran, dioxane, ethylene glycol mono-tert-butyl ether, dipropylene glycol dimethyl ether and propylene glycol mono methyl ether acetate (PGMEA); N methyl pyrrolidone; and the like.

In one embodiment, glycol ethers such as dipropylene glycol dimethyl ether and propylene glycol mono methyl ether acetate (PGMEA) are preferable among the aforementioned water-soluble organic solvents.

Examples of the water immiscible organic solvent include a hydrocarbon-based solvent such as hexane, benzene, toluene, xylene, ethyl benzene, tetralin, IP solvent 1620; a halogen-containing-based solvent such as methylene chloride, chloroform, carbon tetrachloride, dichloroethane, tetrachloroethane; an ester-based solvent such as ethyl acetate, isobutyl acetate, n-butyl acetate, butyl butyrate, ethyl lactate; ketone solvents such as methyl isobutyl ketone (MIBK), diisobutyl ketone (DIBK), methyl ethyl ketone, cyclopentanone, cyclohexanone; and ether solvents such as cyclopentyl methyl ether, 4-methyl tetra hydro pyran, 1,2-diethoxy ethane; and the like. Moreover, an isoparaffin-based solvent containing one kind or two or more kinds of isoparaffin may be used as a hydrocarbon-based solvent.

Among these, toluene, xylene, methyl isobutyl ketone, chloroform, trichloroethane, ethyl acetate, tetrahydrofuran, cyclohexanone, and methyl ethyl ketone are preferable in terms of excellent solubility of the component (b).

The polyaniline complex in the component (b) can be dissolved even when the solvent is alcohols such as isopropyl alcohol, 1-butanol, 2-butanol, 2-pentanol, benzyl alcohol, and alkoxy alcohol. Alcohol is preferable compared to the aromatics such as toluene, from the viewpoint of environmental burden reduction.

When an organic solvent is used as a solvent, a mixed organic solvent of which a water immiscible organic solvent and a water-soluble organic solvent is mixed in 99 to 1:1 to 99 (mass ratio) can be used. The mixed organic solvent is used, the occurrence of gelling and the like during preservation can be prevented, and is preferable since long-term preservation is possible.

A low polarity organic solvent can be used as the water immiscible organic solvent of the aforementioned mixed organic solvent, where the low polarity organic solvent is preferably a hydrocarbon-based solvent such as hexane, toluene; a halogen-containing-based solvent such as chloroform; or an isoparaffin-based solvent.

A high polarity organic solvent can be used as the water-soluble organic solvent of the mixed organic solvent, and for example, alcohols such as methanol, ethanol, isopropyl alcohol, 2-methoxy ethanol, 2-ethoxy ethanol, 1-methoxy-2-propanol, 3-methoxy-1-butanol, 1-ethoxy-2-propanol, 2-ethoxy-1-propanol, 1-butoxy-2-propanol; ketones such as acetone, methyl ethyl ketone, methyl isobutyl ketone; and ethers such as tetrahydrofuran, diethyl ether, cyclopentyl methyl ether, 4-methyl tetra hydro pyran, ethylene glycol mono-tert-butyl ether are preferable.

The mixed organic solvent may include one kind or two or more kinds of water immiscible organic solvents, or it

may include one kind or two or more kinds of water-soluble organic solvents.
The component (c) may be used alone, or two or more thereof may be used in combination.
The amount of the component (c) may be 50 to 99.8% by mass, 55 to 95% by mass, or 70 to 90% by mass, based on 100% by mass of the entire composition.

(Component (d): phenolic compound)

In one embodiment, in addition to the aforementioned components (a) to (c), the conductive composition further includes a phenolic compound. When the phenolic compound is included, the conductivity of a material obtained by using the conductive composition can be further increased.
The phenolic compound is not particularly limited; however, it is a compound represented by ArOH (here, Ar is an aryl group or a substituted aryl group). Specific examples thereof include substituted phenols such as phenol, o-, m- or p-cresol, o-, m- or p-ethyl phenol, o-, m- or p-propyl phenol, o-, m- or p-butyl phenol, o-, m- or p-chlorophenol, o-, m- or p-tert-amyl phenol, salicylic acid, hydroxy benzoic acid and hydroxy naphthalene; polyvalent phenolic compounds such as catechol, resorcinol; polymer compounds such as phenol resin, polyphenol and poly(hydroxy styrene) ; and the like.
Moreover, a phenolic compound represented by the following formula (3) can be used therein:

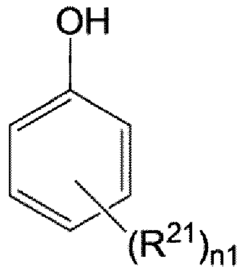

(3)

wherein in the formula (3), n1 is an integer of 1 to 5 (preferably 1 to 3); and
$R^{21}$ is independently an alkyl group having 1 to 10 carbon atoms (preferably 2 to 8 and more preferably 3 to 7), alkenyl group having 2 to 20 carbon atoms, alkylthio group having 1 to 20 carbon atoms, cycloalkyl group having 3 to 10 carbon atoms, aryl group having 6 to 20 carbon atoms, alkyl aryl group having 7 to 20 carbon atoms, or aryl alkyl group having 7 to 20 carbon atoms.
The aforementioned $R^{21}$ is explained below.
Examples of the alkyl group include methyl, ethyl, propyl, isopropyl, butyl, isobutyl, tert-butyl, tert-amyl, and the like.
Examples of the alkenyl group include a substituent having an unsaturated bond in the molecule of the aforementioned alkyl group.
Examples of the cycloalkyl group include cyclopentane, cyclohexane, and the like.
Examples of the alkylthio group include methylthio, ethylthio, and the like.
Examples of the aryl group include phenyl, naphthyl, and the like.
Examples of the alkyl aryl group and aryl alkyl group include a substituent and the like obtained by combining the aforementioned alkyl group and aryl group.
Among these groups, $R^{21}$ is preferably a methyl or ethyl group.
Moreover, a phenolic compound represented by the following formula (3') can be used:

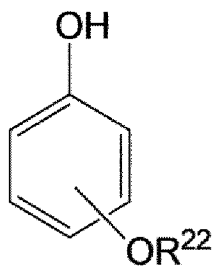

(3')

wherein in the formula (3'), $R^{22}$ is an alkyl group having 1 to 20 carbon atoms, alkenyl group having 2 to 20 carbon atoms, cycloalkyl group having 3 to 10 carbon atoms, alkylthio group having 1 to 20 carbon atoms, aryl group having 6 to 20 carbon atoms, alkyl aryl group having 7 to 20 carbon atoms, or aryl alkyl group having 7 to 20 carbon atoms.

Specific examples of $R^{22}$ in the formula (3') are the same as those of $R^{21}$ in the aforementioned formula (3).
The component (d) may be used alone, or two or more thereof may be used in combination.
The amount of the component (d) may be 1 to 50% by mass, it may be 5 to 45% by mass, it may be 10 to 40% by mass, it may be 10 to 30% by mass, and it may be 10 to 20% by mass, based on 100% by mass of the entire conductive composition.

(Component (e): acidic substance and/or salt of acidic substance)

In one embodiment, in addition to the aforementioned components (a) to (c), an acid of a type different to the aforementioned hydrophobic sulfonic acid compound (proton donor) may be further added to the conductive composition, and one or more selected from the group consisting of acidic substances and salts of acidic substances (hereinunder, also referred to as 'component (e)') may be further included. The component is normally used as a heat-resistant stabilizer, and can further improve the heat resistance of an electrically conducting material such as a conductive film obtained using the conductive composition.
The component (e) may be added to the conductive composition, or may be made to be included by immersing a coating film and the like formed from the conductive composition, in a solution of which an acidic substance and/or salt of an acidic substance is dissolved.
The acidic substance may be any of an organic acid which is an acid of an organic compound or an inorganic acid which is an acid of an inorganic compound, but is preferably an organic acid. The acidic substance is preferably an organic acid containing one or more sulfonic acid groups.
The organic acid having the aforementioned sulfonic acid group is preferably a cyclic, chain or branched alkyl sulfonic acid, substituted or unsubstituted aromatic sulfonic acid, or polysulfonic acid with one or more sulfonic acid groups.
Examples of the aforementioned alkyl sulfonic acid include methane sulfonic acid and ethane sulfonic acid. Here, the alkyl group is preferably a linear or branched alkyl group having 1 to 18 carbon atoms.
Examples of the aforementioned aromatic sulfonic acid include those having 6 to 20 carbon atoms, and examples thereof include a sulfonic acid having a benzene ring, a sulfonic acid having a naphthalene skeleton, and a sulfonic acid having an anthracene skeleton. Moreover, examples of the aforementioned aromatic sulfonic acid include substituted or unsubstituted benzene sulfonic acid, substituted or unsubstituted naphthalene sulfonic acid, and substituted or unsubstituted anthracene sulfonic acid.
The substituent is, for example, a substituent selected from the group consisting of an alkyl group (for example, having 1 to 20 carbon atoms), alkoxy group (for example, having 1 to 20 carbon atoms), hydroxy group, nitro group, carboxy group, acyl group, and one or more thereof may substitute.
Specific examples of the aromatic sulfonic acid include a compound represented by the following formula (4) or (5):

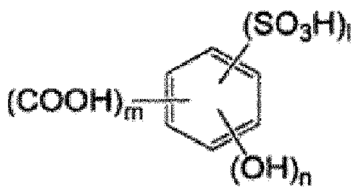

(4)

wherein in the formula (4), l is 1 or more, m is an integer of 0 or more and 5 or less, n is an integer of 0 or more and 5 or less; when one of m or n is 0, the other is 1 or more:

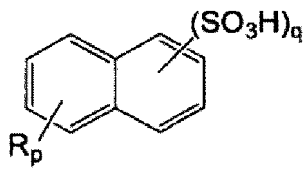

(5)

wherein in the formula (5), q is 1 or more, p is an integer of 0 or more and 7 or less, and R is independently an alkyl group having 1 to 20 carbon atoms, carboxy group, hydroxide group, nitro group, cyano group, or amino group.
l of the formula (4) is preferably 1 to 3. m of the formula (4) is preferably 1 to 3. n of the formula (4) is preferably 0 to 3.
q of the formula (5) is preferably 1 to 3. p of the formula (5) is preferably 0 to 3. R of the formula (5) is preferably an alkyl group

having 1 to 20 carbon atoms, carboxy group, or hydroxide group.

Examples of the aromatic sulfonic acid include 4-sulfophthalic acid, 5-sulfoisophthalic acid, 5-sulfosalicylic acid, 1-naphthalene sulfonic acid, 2-naphthalene sulfonic acid, 2-hydroxy-6-naphthalene sulfonic acid, p-phenol sulfonic acid, toluene sulfonic acid, p-xylene-2-sulfonic acid, 4,4'-biphenyl disulfonic acid, dibenzofuran-2-sulfonic acid, flavianic acid, (+)-10-camphor sulfonic acid, mono isopropyl naphthalene sulfonic acid, 1-pyrene sulfonic acid, and the like. 4-sulfophthalic acid, 5-sulfosalicylic acid, 5-sulfoisophthalic acid, 2-naphthalene sulfonic acid, dibenzofuran-2-sulfonic acid, flavianic acid, 2-hydroxy-6-naphthalene sulfonic acid and 1-pyrene sulfonic acid are preferable among these from the viewpoint of heat resistance improvement.

Examples of the salt of the acidic substance include a salt of a compound mentioned above. Examples of the counter-ion of salt include sodium, lithium, potassium, cesium, ammonium, calcium, barium, and the like.

The component (e) may be a hydrate.

The component (e) may be used alone, or two or more thereof may be used in combination.

When the component (e) is included therein, the amount of the component (e) is preferably 0.01 to 10% by mass, more preferably 0.02 to 5% by mass, and still more preferably 0.05 to 3% by mass, based on 100% by mass of the entire composition.

When the component (e) is included therein, the mass ratio of the amount of the component (b) and the amount of the component (e) ('the amount of the component (b)': 'the amount of the component (e)'), from the viewpoint of heat resistance, may be 1:0.01 to 1:1, and is preferably 1:0.05 to 1:0.5, and more preferably 1:0.07 to 1:0.1.

In one embodiment, the conductive composition may include various additives such as a binder in addition to the aforementioned components (a) to (e). Known binders can be used as the binder.

In one embodiment, the conductive composition may further include at least one selected from the group consisting of a resin and an inorganic material in addition to the aforementioned components (a) to (e).

As the resin and inorganic material, known ones utilized for obtaining a molded body including the carbon nanotube can be used with no particular limitation.

In one embodiment, the conductive composition may include various additives such as a binder, and at least one selected from the group consisting of a resin and an inorganic material in addition to the aforementioned components (a) to (e).

The composition according to an aspect of the present invention may essentially consist of the components (a), (b) and (c), and optionally one or more components selected from the group consisting of the components (d) and (e). In this case, other unavoidable impurities may be contained as long as the effect of the present invention is not impaired.

For example, 70% by mass or more, 80% by mass or more, 90% by mass or more, 98% by mass or more, 99% by mass or more, 99.5% by mass or more, 99.9% by mass or more, or 100% by mass of the composition according to an aspect of the present invention,

may consist
the components (a) to (c),
the components (a) to (d),
the components (a) to (c) and (e), or
the components (a) to (e).

The preparation method of the composition according to an aspect of the present invention is not particularly limited; however, it is obtained by mixing the aforementioned component (a) to component (e) by a known method.

The mixing method is not particularly limited; however, it can be performed by, for example, stir-mixing the mixed liquid containing the aforementioned component (a) to component (e) with a known method. Also, the stirring temperature and stirring speed is not particularly limited.

Moreover, the mixing order is not particularly limited; however, for example, stir-mixing may be performed after the component (a) is added, to a solution which is obtained by adding the component (b) to a mixed solvent where the component (c) to component (e) are mixed; or stir-mixing may be performed after the component (b) is added, to a solution which is obtained by adding the component (a) to a mixed solvent.

[Conductive film]

A conductive film according to an aspect of the present invention includes

(a) a carbon nanotube, and
(b) a soluble conductive polymer,

where the soluble conductive polymer is (i) or (ii) below.

(i) a complex in which a conductive polymer is doped with a sulfonic acid compound with hydrophobicity
(ii) a conductive polymer having a sulfonic acid group-containing side chain

The conductive film according to an aspect of the present invention is formed using the aforementioned conductive composition.

For example, the conductive composition according to an aspect of the present invention is coated on a substrate, and a conductive film can be formed by drying the conductive composition to thereby remove the component (c) (solvent). A conductive plating laminate may be formed by coating the conductive composition on a substrate such as glass, resin film, sheet, or non-woven having a desired shape.

The thickness of the conductive film is usually 1 mm or less, and preferably 10 nm to 50 μm.

Examples of the surface resistance of the conductive film according to an aspect of the present invention include 500 Ω/square or less, 450 Ω/square or less, 400 Ω/square or less, 300 Ω/square or less, 200 Ω/square or less, or 150 Ω/square or less from the viewpoint of exhibiting an effect as an electrically conducting material.

The surface resistance of the conductive film is measured by the method described in the examples.

As a method of coating the composition, known methods such as the casting method, spraying method, dip coating method, doctor blade method, bar coating method, spin coating method, electro-spinning method, screen printing and gravure printing method can be employed.

Moreover, a step may be provided to immerse the aforementioned conductive film (coating film) in a solution containing the aforementioned component (e) and drying the. The compound represented by the aforementioned formula (4) or the salt thereof is preferable as the component (e) in this case.

The solution to be used in the immersion may contain a solvent.

The solvent is not particularly limited as long as the component (e) is dissolved; however, examples thereof include water, an alcohol-based solvent, ketone-based solvent, ether-based solvent, ester-based solvent, and the like. It may used alone, or two or more thereof may mixed and used.

Specific examples of the solvent include methanol, ethanol, isopropanol, n-butanol, 1-methoxy-2-propanol, 3-methoxy-1-butanol, 3-methoxy-3-methyl butanol, 1-ethoxy-2-propanol, ethyl acetate, butyl acetate, MIBK, methyl ethyl ketone (MEK), ethylene glycol mono-tert-butyl ether, propylene glycol mono methyl ether acetate, dipropylene glycol mono methyl ether, and the like.

The amount of the component (e) in the solution to be used in the immersion is preferably 10 to 1,200 parts by mass, more preferably 30 to 700 parts by mass, and still more preferably 70 to 400 parts by mass, based on 1 part by mass of the composition obtained by removing the solvent.

When the amount thereof is more than 1,200 parts by mass, the acidic substance in the coating film becomes excessive which could cause degradation of the polyaniline main chain, and could cause a reduction in conductivity.

Moreover, the component (e) is preferably 0.1% by mass to 10% by mass, more preferably 0.3% by mass to 6% by mass, and still more preferably 0.7% by mass to 3.5% by mass, in the solution to be used in immersion.

Examples of the immersion method includes dipping and the like.

The immersion time is preferably 1 minute or more, more preferably 3 minutes or more and 200 minutes or less, and still more preferably 7 minutes or more to 30 minutes or less. The immersion temperature is preferably 5°C to 50°C.

Drying after immersion is preferably performed by an oven, hot plate, and the like.

The drying temperature is preferably 80 to 200°C, and more preferably 100 to 170°C.

The drying time is preferably 1 to 180 minutes, and more preferably 3 to 60 minutes. Heating may be performed under reduced pressure as necessary. The drying temperature and drying time are not particularly limited; and they may be appropriately selected depending on the materials to be used.

As mentioned above, the component (e) may be added to the aforementioned conductive composition, or it may be included in the conductive film obtained from the conductive composition. The component (e) may be added to the conductive composition and further included in the conductive film obtained from the conductive composition.

Namely, the conductive film according to an aspect of the present invention may include a component (e) which is added to the composition before film formation (hereinunder, sometimes referred to as component (e1)), and a component (e) which is added by immersing after film formation (hereinunder, sometimes referred to as component (e2)). The components (e1) and (e2) may be the same as or different from each other. When these are different from each other, for example, the component (e1) is the compound represented by the aforementioned formula (5), and the component (e2) is the compound represented by the aforementioned formula (4).

The conductive film according to an aspect of the present invention can be used as a battery material.

[Conductive laminate body]

A conductive plating laminate according to an aspect of the present invention includes a substrate, and an electrically conducting layer composed of the conductive material according to an aspect of the present invention, wherein

the electrically conducting layer and substrate are in contact.

For example, a conductive plating laminate having an electrically conducting layer (conductive film) can be produced by coating the conductive composition according to an aspect of the present invention on a substrate such as glass, resin film, sheet, and non-woven having a desired shape, and removing the solvent. A conductive article can be produced by working the conductive plating laminate into a desired shape by means of a known method such as vacuum forming and compressed air forming. From the viewpoint of the forming, the substrate is preferably a resin film, sheet, non-woven, or the like.

As the coating method of the conductive composition onto the substrate, known methods such as the casting method, spraying method, dip coating method, doctor blade method, bar coating method, spin coating method, electrospinning method, screen printing and gravure printing method can be used. When drying the aforementioned coating film, the coating film may be heated depending on the type of solvent. For example, heating is performed under air flow at a temperature of 250°C or less, and preferably 50 or more and 200°C or less, and is further performed under reduced pressure or under nitrogen flow as necessary. The heating temperature and heating time are not particularly limited; and they may be appropriately selected depending on the material to be used.

A self-supporting type molded body having no substrate may be formed using the composition according to an aspect of the present invention.

[Conductive material]

A conductive material according to an aspect of the present invention is produced from the conductive composition according to an aspect of the present invention.

The conductive material according to an aspect of the present invention is formed, for example, by removing the component (c) (solvent) from the conductive composition according to an aspect of the present invention.

The removal method of the component (c) (solvent) includes, for example, coating the conductive composition on a substrate, and drying it.

A film, molded body, powder body or granular body according to an aspect of the present invention includes the conductive material according to an aspect of the present invention.

In other words, the shape of the conductive material according to an aspect of the present invention is not particularly limited; and it can be selected depending on the objective, where examples thereof include a film, molded body, powder body, granular body, and the like.

The conductive material according to an aspect of the present invention can be used, for example, as a conductive aid for a battery. Examples of the shape of the conductive aid for a battery include a film, powder body or granular body.

[Conductive article]

A conductive article according to an aspect of the present invention is produced from a mixture of the conductive composition according to an aspect of the present invention, and at least one selected from a resin and an inorganic material.

The conductive article according to an aspect of the present invention is obtained by mixing the conductive composition according to an aspect of the present invention with at least one selected from the group consisting of a resin and an inorganic material and, for example, drying the mixture to remove the component (c) (solvent).

The shape of the conductive article is not particularly limited; and it can be appropriately determined depending on the use objective.

[Battery]

A battery according to an aspect of the present invention includes the conductive aid for a battery which includes the conductive material according to an aspect of the present invention.

The battery is not particularly limited; however, examples thereof include a lithium secondary battery.

Examples

Preparation Example 1 (preparation of polyaniline complex)

32.4 g of 'NEOCOL SWC' (sodium di-2-ethylhexyl sulfosuccinate, manufactured by DKS Co. Ltd., HBL value: 3.66), 13.3 g of aniline, and 0.9 g of 'Sorbon T-20' (non-ionic emulsifier having a polyoxyethylene sorbitan fatty acid ester structure, manufactured by TOHO Chemical Industry Co., Ltd.) were added to a 1,000 mL of separable flask, and they were

dissolved in 320.4 g of toluene. 450 g of an 8.5% by mass phosphoric acid aqueous solution was added thereto. A reaction liquid having two liquid phases of toluene and water was stirred, and the internal temperature of the reaction liquid was cooled to 5°C. At the point in time when the internal temperature of the reaction liquid attained 5°C, a solution of which 39.3 g of APS (ammonium persulfate) was dissolved in 90.2 g of an 8.5% by mass phosphoric acid aqueous solution was added by using a dropping funnel while stirring the reaction liquid, and it was stirred for 4 hours while keeping the solution internal temperature as-is at 5°C. After the stirring was stopped, the contents were moved to a liquid-separating funnel, and then they were left to stand to separate the water phase and the toluene phase (organic phase).

After separation, the toluene phase (organic layer) was washed once with 180.3 g of the 8.5% by mass phosphoric acid aqueous solution, and was washed 5 times with 328.0 g of ion exchanged water to thereby obtain a polyaniline complex toluene solution.

The solution was moved to an evaporator, heated in a warm bath of 60°C, and pressure was reduced to thereby remove volatile components by distilling them off, and thereby obtain a polyaniline complex (protonated polyaniline). The weight average molecular weight (Mw) of the polyaniline of Polyaniline Complex 1 was 73,000.

The weight average molecular weight of the polyaniline was measured by the following.

1.65 to 1.85 g of lithium bromide based on 2,000 mL of NMP (N-methyl-2-pyrrolidone) was dissolved to prepare an NMP solution of 0.01 M of lithium bromide. 14 μL of triethylamine was added to 10 mL of the NMP solution of 0.01 M of lithium bromide, which was stirred and dissolved thus becoming a homogeneous solution. 50 μL of the polyaniline complex toluene solution obtained in Preparation Example 1 was further dropped, stir-mixed and then passed through a 0.45 μm filter, thereby preparing a sample for measuring gel permeation chromatography (GPC).

The GPC measurement was performed by the following measurement conditions employing GPC columns (manufactured by Showa Denko K.K. 'Shodex KF-806M', two connected columns).

Solvent: 0.01 M of LiBr-containing NMP
Flow rate: 0.70 mL/minute
Column temperature: 60°C
Injection amount: 100 μL
UV detection wavelength: 270 nm

The weight average molecular weight obtained by the aforementioned method is polystyrene (PS) equivalent value.

The doping ratio of a proton donor (sodium di-2-ethylhexyl sulfosuccinate) to polyaniline was 0.36.

The HBL value of 'NEOCOL SWC' (sodium di-2-ethylhexyl sulfosuccinate, manufactured by DKS Co. Ltd.) was calculated based on the following formula (A).

$$\text{HBL value} = 20 \times (\text{formula weight of the } SO_3Na \text{ portion}) / \text{molecular weight} \ldots (A)$$

The HLB value based on the formula (A) of sodium di-2-ethylhexyl sulfosuccinate (molecular weight: 443.61, formula weight of the $SO_3Na$ portion: 81.07) was the formula (A) = 20 × 81.07 / 443.61 = 3.66.

Example 1 (preparation of conductive composition)

70 g of cyclohexanone (component (c)) (manufactured by Tokyo Chemical Industry Co., Ltd.), and 30 g of 4-tert-amylphenol (component (d)) (manufactured by FUJIFILM Wako Pure Chemical Corporation) were mixed until becoming homogeneous to prepare Mixed Solution A. 1.6 g of the polyaniline complex (component (b)) obtained by Preparation Example 1 was dissolved in 98.4 g of Mixed Solution A to thereby obtain Polyaniline Solution A (polyaniline complex concentration: 1.6% by mass).

2 g of a dispersion liquid of single-walled carbon nanotube (SWCNT) (component (a)), 0.05 g of Polyaniline Solution A, and 1.95 g of Mixed Solution A were stir-mixed to obtain a conductive composition (CNT / polyaniline complex-containing solution).

The compounding ratio of each component contained in the single-walled carbon nanotube (SWCNT) dispersion liquid is shown below.

Carbon nanotube (SWCNT): 0.4% by mass
Alkyl acetalized polyvinyl alcohol: 1.0% by mass
Propylene glycol mono methyl ether acetate (PGMEA): 98.6% by mass

(Evaluation of conductive film (surface resistance))

Under the below conditions, the conductive composition obtained in Example 1 (CNT / polyaniline complex-containing solution) was coated on an easily adhesive PET substrate by means of a bar coater and then dried to obtain a conductive film (CNT / polyaniline complex film).
Bar coating conditions

Coating device: Mini-coater 'MC-30' (manufactured by Hohsen Corp.)
Coating speed: 30 mm/s
Applicator spacing: 150 μm
Drying conditions: 150°C, 10 min

The surface resistance of the conductive film obtained by the aforementioned (CNT / polyaniline complex film) was measured by the four-terminal method using a resistivity meter 'Loresta GP' (manufactured by Mitsubishi Chemical Corporation).
The measured result is shown in Table 1.
The film thickness of the conductive film was measured using a linear gauge sensor (manufactured by Ono Sokki Co., Ltd.). The film thickness of the conductive film is shown in Table 1.

Examples 2 to 5 and Comparative Example 1

Except for having changed the compounding ratios of the same single-walled carbon nanotube (SWCNT) dispersion liquid, Polyaniline Solution A, and Mixed Solution A used in Example 1 to each amount shown in Table 1, conductive compositions (CNT / polyaniline complex-containing solution) were obtained similarly to that of Example 1.
Except for using the conductive compositions (CNT / polyaniline complex-containing solution) of Examples 2 to 5 and Comparative Example 1 instead of the conductive composition of Example 1, conductive films (CNT / polyaniline complex film) were produced similarly to that of Example 1, and were evaluated. The measured result of the film thickness and surface resistance of each conductive film is shown in Table 1.

Table 1

| | Amount | | | Component (a) [% by mass] | Component (b) [% by mass] | Component (d) [% by mass] | Component (a) : component (b) | Surface resistance [Ω/square] | Film thickness [μm] |
|---|---|---|---|---|---|---|---|---|---|
| | Carbon nanotube dispersion liquid [g] | Polyaniline Solution A [g] | Mixed Solution A [g] | | | | | | |
| | 0.4% by mass of carbon nanotube | Polyaniline complex: 1.6% by mass<br>CHN: 68.9% by mass<br>tAP: 29.5% by mass | CHN: 70% by mass<br>tAP: 30% by mass | | | | | | |
| Example 1 | 2 | 0.05 | 1.95 | 0.2 | 0.02 | 14.99 | 100:10 | 4.10E+02 | 1 |
| Example 2 | 2 | 0.25 | 1.75 | 0.2 | 0.1 | 14.97 | 100:50 | 1.44E+02 | 0.4 |
| Example 3 | 2 | 0.5 | 1.5 | 0.2 | 0.2 | 14.94 | 100:100 | 7.80E+01 | 0.6 |
| Example 4 | 2 | 1 | 1 | 0.2 | 0.4 | 14.88 | 100:200 | 6.02E+01 | 0.9 |
| Example 5 | 2 | 2 | 0 | 0.2 | 0.8 | 14.75 | 100:400 | 4.93E+01 | 0.5 |
| Comparative Example 1 | 2 | 0 | 2 | 0.2 | 0 | 15 | 100:0 | 8.15E+02 | 1 |

In Table 1, 'CHN' indicates cyclohexanone, and 'tAP' indicates 4-tert-amylphenol. Moreover, 'E+XX' in Table 1 and below-mentioned Table 2 means 'x $10^{XX}$'

Example 6 (preparation of composition)

70 g of tetrahydrofuran (component (c)) (manufactured by Tokyo Chemical Industry Co., Ltd.), and 30 g of 4-tert-amylphenol (component (d)) (manufactured by FUJIFILM Wako Pure Chemical Corporation) were mixed until becoming homogeneous to prepare Mixed Solution B. 0.4 g of the polyaniline complex (component (b)) obtained by Preparation Example 1 was dissolved in 99.6 g of Mixed Solution B to obtain Polyaniline Solution B (polyaniline complex concentration: 0.4% by mass).

2 g of single-walled carbon nanotube (SWCNT) dispersion liquid (component (a)) (single-walled carbon nanotube concentration was 0.4% by mass) used in Example 1, and 2 g of Polyaniline Solution B were stir-mixed to obtain a conductive composition (CNT / polyaniline complex-containing solution).

(Evaluation of conductive film (surface resistance))

The conductive composition obtained in Example 6 (CNT / polyaniline complex-containing solution) was coated on a glass substrate by means of a spin coating method under the below conditions and then dried to obtain a conductive film (CNT / polyaniline complex film).

Spin coating conditions

Coating device: Spin coater 'MS-A100' (manufactured by Mikasa Co., Ltd.)
Rotation speed: 500 rpm
Drying conditions: 150°C, 5 min

The surface resistance of the conductive film obtained by the aforementioned (CNT / polyaniline complex film) was measured by the four-terminal method using a resistivity meter 'Loresta GP' (manufactured by Mitsubishi Chemical Corporation). The result is shown in Table 2.

The film thickness of the conductive film was measured using a linear gauge sensor (manufactured by Ono Sokki Co., Ltd.). The film thickness of the conductive film is shown in Table 2.

Example 7

0.4 g of the polyaniline complex obtained by Preparation Example 1 was dissolved in 99.6 g of tetrahydrofuran to obtain Polyaniline Solution C (polyaniline complex concentration: 0.4% by mass).

In the subsequent step, except for replacing Polyaniline Solution B in Example 6 for Polyaniline Solution C, a conductive composition (CNT / polyaniline complex-containing solution) was obtained similarly to that of Example 6.

Except for using the conductive composition (CNT / polyaniline complex-containing solution) of Example 7 instead of the conductive composition of Example 6, a conductive film (CNT / polyaniline complex film) was produced similarly to that of Example 6, and was evaluated. The measured result of the film thickness and surface resistance of the conductive film is shown in Table 2.

Comparative Example 2

2 g of the same single-walled carbon nanotube (SWCNT) dispersion liquid (carbon nanotube concentration was 0.4% by mass) used in Example 1, and 2 g of tetrahydrofuran (component (c)) (manufactured by Tokyo Chemical Industry Co., Ltd.) were mixed to obtain a conductive composition (CNT dispersion liquid).

Except for using the conductive composition (CNT dispersion liquid) of Comparative Example 2 instead of the conductive composition of Example 6, a conductive film (CNT single film) was produced similarly to that of Example 6, and was evaluated. The measured result of the film thickness and surface resistance of the conductive film is shown in Table 2.

Table 2

| | Amount | | | | Component (a) [% by mass] | Component (b) [% by mass] | Component (d) [% by mass] | Component (a) : component (b) | Surface resistance [Ω/square] | Film thickness [μm] |
|---|---|---|---|---|---|---|---|---|---|---|
| | Carbon nanotube dispersion liquid [g] | Polyaniline Solution B [g] | Polyaniline Solution C [g] | THF [g] | | | | | | |
| | 0.4% by mass of carbon nanotube | Polyaniline complex: 0.4% by mass THF: 69.7% by mass tAP: 29.9% by mass | Polyaniline complex: 0.4% by mass THF: 99.6% by mass | | | | | | | |
| Example 6 | 2 | 2 | 0 | 0 | 0.2 | 0.2 | 14.95 | 100:100 | 2.80E+01 | 4 |
| Example 7 | 2 | 0 | 2 | 0 | 0.2 | 0.2 | 0 | 100:100 | 2.34E+02 | 4 |
| Comparative Example 2 | 2 | 0 | 0 | 2 | 0.2 | 0 | 0 | 100:0 | 2.80E+02 | 4 |

In Table 2, 'THF' indicates tetrahydrofuran, and 'tAP' indicates 4-tert-amylphenol.

As shown in Tables 1 and 2, compared to Comparative Examples 1 and 2 where only carbon nanotube was used, in the conductive film obtained from the conductive compositions of Examples 1 to 7 of which a polyaniline complex was compounded in the carbon nanotube, the surface resistance was suppressed to low values and excellent conductivity was obtained. Moreover, in conjunction with the increase of the amount of the polyaniline complex, the surface resistance of the conductive film to be obtained was reduced; and in the conductive film of Example 5 which had the highest amount of the polyaniline complex, the surface resistance was greatly reduced compared to the conductive film of Example 1.

Industrial Applicability

The conductive composition of the present invention and the conductive film of the present invention can be utilized in conductive aids, electrodes for touch film, electromagnetic wave shielding materials, anti-static agents, batteries, capacitors, and the like.

Although only some exemplary embodiments and/or examples of this invention have been described in detail above, those skilled in the art will readily appreciate that many modifications are possible in the exemplary embodiments and/or examples without materially departing from the novel teachings and advantages of this invention. Accordingly, all such modifications are intended to be included within the scope of this invention.

The documents described in the specification and the specification of Japanese application(s) on the basis of which the present application claims Paris convention priority are incorporated herein by reference in its entirety.

## Claims

**1.** A conductive composition comprising

(a) a carbon nanotube,
(b) a soluble conductive polymer, and
(c) a solvent,

wherein the soluble conductive polymer is (i) or (ii) below.

(i) a complex in which a conductive polymer is doped with a sulfonic acid compound with hydrophobicity
(ii) a conductive polymer having a sulfonic acid group-containing side chain

**2.** The conductive composition according to claim 1, wherein the number of carbon atoms of the sulfonic acid compound with hydrophobicity in the (i), or the sulfonic acid group-containing side chain in the (ii) is 6 or more.

**3.** The conductive composition according to claim 1 or 2, wherein the HLB value of the sulfonic acid compound with hydrophobicity in the (i) is 1 to 8.

**4.** The conductive composition according to any one of claims 1 to 3, wherein the sulfonic acid compound with hydrophobicity in the (i) is a sulfonic acid compound represented by the following formula (III):

$$M(O_3SCH(CH_2COOR^{12})COOR^{13})_m \qquad (III)$$

wherein in the formula (III),

M is a hydrogen atom, organic free radical or inorganic free radical,
m is a valence number of M,
$R^{12}$ and $R^{13}$ are independently a hydrocarbon group or a group represented by $-(R^{14}O)_r-R^{15}$,
$R^{14}$ is a hydrocarbon group or silylene group,
$R^{15}$ is a hydrogen atom, hydrocarbon group or a group represented by $R^{16}{}_3Si-$,
$R^{16}$ is a hydrocarbon group, three $R^{16}$'s may be the same as or different from each other, and r is an integer of 1 or more.

**5.** The conductive composition according to any one of claims 1 to 4, wherein the conductive polymer in the (i) is polyaniline.

**6.** The conductive composition according to any one of claims 1 to 5, which further comprises (d) a phenolic compound.

**7.** The conductive composition according to any one of claims 1 to 6, wherein the amount of the component (b) is 1 to 400 parts by mass based on 100 parts by mass of the component (a).

**8.** The conductive composition according to any one of claims 1 to 7, which further comprises at least one selected from the group consisting of a resin and an inorganic material.

**9.** A conductive material, produced from the conductive composition according to any one of claims 1 to 8.

**10.** A film, molded body, powder body or granular body comprising the conductive material according to claim 9.

**11.** A conductive aid for a battery, comprising the conductive material according to claim 9.

**12.** A conductive film comprising

(a) a carbon nanotube, and
(b) a soluble conductive polymer,

wherein the soluble conductive polymer is (i) or (ii) below.

(i) a complex in which a conductive polymer is doped with a sulfonic acid compound with hydrophobicity
(ii) a conductive polymer having a sulfonic acid group-containing side chain

**13.** A conductive article, produced from a mixture of the conductive composition according to any one of claims 1 to 7, and at least one selected from the group consisting of a resin and an inorganic material.

**14.** A conductive plating laminate comprising

a substrate, and
an electrically conducting layer composed of the conductive material according to claim 9, wherein the electrically conducting layer and the substrate are in contact.

**15.** A battery comprising the conductive aid for a battery according to claim 11.

Fig. 1

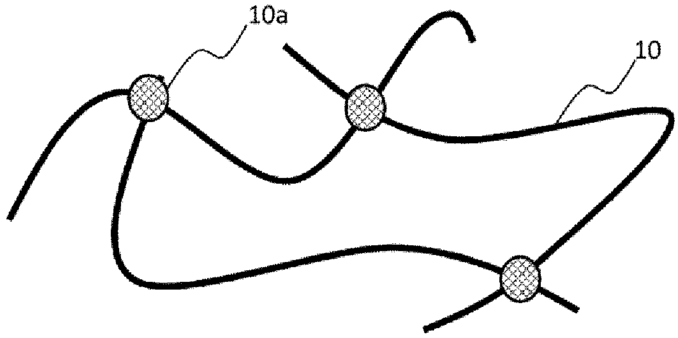


Fig. 2

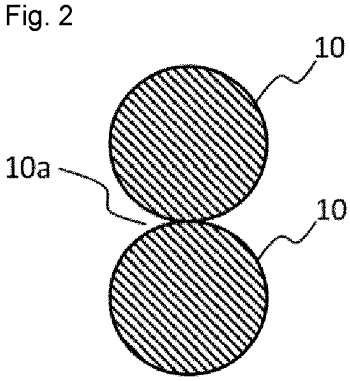


Fig. 3

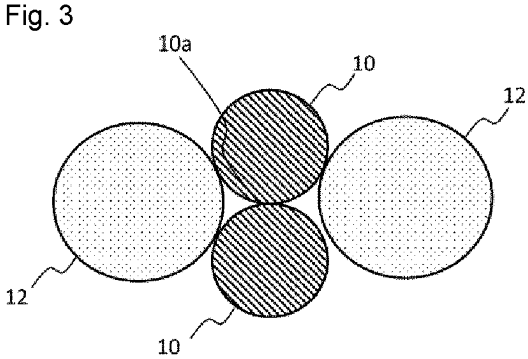


Fig. 4

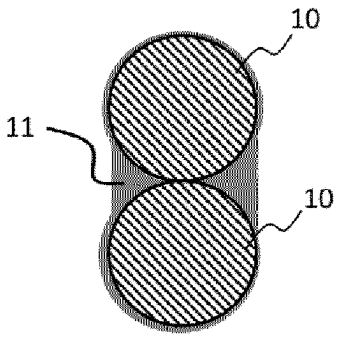

## INTERNATIONAL SEARCH REPORT

International application No. **PCT/JP2023/036166**

**A. CLASSIFICATION OF SUBJECT MATTER**

***C08L 101/12***(2006.01)i; ***C08K 3/04***(2006.01)i; ***C08K 5/42***(2006.01)i; ***C08K 7/06***(2006.01)i; ***C08L 79/00***(2006.01)i; ***H01B 1/24***(2006.01)i; ***H01M 4/62***(2006.01)i
FI: C08L101/12; C08K3/04; C08K5/42; C08K7/06; C08L79/00 A; H01B1/24 A; H01M4/62 Z

According to International Patent Classification (IPC) or to both national classification and IPC

**B. FIELDS SEARCHED**

Minimum documentation searched (classification system followed by classification symbols)

C08L101/12; C08K3/04; C08K5/42; C08K7/06; C08L79/00; H01B1/24; H01M4/62

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

CAplus/REGISTRY (STN)

**C. DOCUMENTS CONSIDERED TO BE RELEVANT**

| Category* | Citation of document, with indication, where appropriate, of the relevant passages | Relevant to claim No. |
|---|---|---|
| X<br>A | CN 112430352 A (FUZHOU UNIVERSITY) 02 March 2021 (2021-03-02)<br>claims, abstract, example 1 | 1-5, 7, 9, 10, 13, 14<br>6, 8, 11, 12, 15 |
| X<br>A | JP 2020-153025 A (IDEMITSU KOSAN CO) 24 September 2020 (2020-09-24)<br>claims, paragraph [0045], production examples 1, 2, example 1 | 1-10, 13, 14<br>11, 12, 15 |
| X<br>Y | JP 2011-178878 A (MITSUBISHI RAYON CO LTD) 15 September 2011 (2011-09-15)<br>claims, paragraphs [0032], [0057], [0061], [0101], example 1 | 1-3, 5, 7-15<br>4, 6 |
| Y | JP 2021-113286 A (IDEMITSU KOSAN CO) 05 August 2021 (2021-08-05)<br>claims, paragraph [0092] | 4, 6 |
| Y | WO 2019/216155 A1 (IDEMITSU KOSAN CO) 14 November 2019 (2019-11-14)<br>claims, paragraph [0047] | 4, 6 |

☑ Further documents are listed in the continuation of Box C. ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **11 December 2023** | **19 December 2023** |
| Name and mailing address of the ISA/JP<br>**Japan Patent Office (ISA/JP)**<br>**3-4-3 Kasumigaseki, Chiyoda-ku, Tokyo 100-8915**<br>**Japan** | Authorized officer<br><br>Telephone No. |

Form PCT/ISA/210 (second sheet) (January 2015)

**INTERNATIONAL SEARCH REPORT**

International application No.
**PCT/JP2023/036166**

**C. DOCUMENTS CONSIDERED TO BE RELEVANT**

| Category* | Citation of document, with indication, where appropriate, of the relevant passages | Relevant to claim No. |
|---|---|---|
| Y | JP 2019-112499 A (IDEMITSU KOSAN CO) 11 July 2019 (2019-07-11) claims, paragraph [0036] | 4, 6 |

Form PCT/ISA/210 (second sheet) (January 2015)

**INTERNATIONAL SEARCH REPORT**
**Information on patent family members**

International application No.
**PCT/JP2023/036166**

| Patent document cited in search report | Publication date (day/month/year) | Patent family member(s) | Publication date (day/month/year) |
|---|---|---|---|
| CN 112430352 A | 02 March 2021 | (Family: none) | |
| JP 2020-153025 A | 24 September 2020 | (Family: none) | |
| JP 2011-178878 A | 15 September 2011 | (Family: none) | |
| JP 2021-113286 A | 05 August 2021 | US 2023/0054448 A1<br>claims, paragraph [0107]<br>EP 4095188 A1<br>CN 114945632 A<br>KR 10-2022-0131220 A | |
| WO 2019/216155 A1 | 14 November 2019 | US 2021/0238350 A1<br>claims, paragraph [0096]<br>EP 3792315 A1<br>CN 112088191 A<br>KR 10-2021-0007962 A | |
| JP 2019-112499 A | 11 July 2019 | (Family: none) | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2015170740 A